# EUROPÄISCHE PATENTSCHRIFT

(11) **EP 1 754 921 B1**
(45) Veröffentlichungstag und Bekanntmachung des Hinweises auf die Patenterteilung: **05.10.2011**
(21) Anmeldenummer: 06015287.3
(22) Anmeldetag: 22.07.2006
(51) Int. Cl.: F16L 37/091, F16L 37/092, F16L 33/32

(54) **Anschlussvorrichtung für eine Fluidleitung**
Connecting device for connecting a fluid
Dispositif de raccordement pour un conduit de fluide

(30) Priorität: 19.08.2005 DE 202005013126 U
(43) Veröffentlichungstag der Anmeldung: 21.02.2007
(73) Patentinhaber: FESTO AG & Co. KG, 73734 Esslingen (DE)
(72) Erfinder: Weiß, Martin, 73035 Göppingen (DE)
(74) Vertreter: Abel, Martin

(56) Entgegenhaltungen:
- FR-A1- 2 710 717
- FR-A1- 2 845 607
- US-A- 5 466 017
- US-B1- 6 481 759

## Beschreibung

Die Erfindung betrifft eine Anschlussvorrichtung für eine Fluidleitung, mit einem eine Einstecköffnung für eine Fluidleitung umschließenden kombinierten Halte- und Lösering, der auf einer zur Ring-Längsachse rechtwinkeligen Hauptachse zwei sich diametral gegenüberliegende, nach radial innen ragende Krallenelemente trägt, die geeignet sind, eine eingesteckte Fluidleitung umfangsseitig von entgegengesetzten Seiten her unter Vorspannung haltend zu beaufschlagen, und der derart federelastisch verformbar ausgebildet ist, dass er sich zum Lösen einer festgehaltenen Fluidleitung manuell quer zu der Hauptachse ein Stück weit zusammendrücken lässt, woraus gleichzeitig in der Richtung der Hauptachse ein gegenseitiges voneinander Entfernen der sich gegenüberliegenden Krallenelemente unter Freigabe einer dazwischen angeordneten Fluidleitung resultiert.

Eine derartige Anschlussvorrichtung ist aus der US 6 481 759 B1 bekannt und verfügt dort über einen Ringabschnitt, von dem zwei Haltevorsprünge nach innen ragen, die einen Vorsprung einer eingesteckten Fluidleitung hintergreifen können. Zum Freigeben der Fluidleitung ist der Ringabschnitt elliptisch zu verformen, sodass die Haltevorsprünge auseinandergespreizt werden.

Eine aus der DE 101 62 657 B4 bekannte Anschlussvorrichtung besitzt einen zur Einpressmontage in einer Ausnehmung eines Tragkörpers ausgebildeten hülsenförmigen Einsatzkörper, der einen federelastischen Haltering mit entlang seines Umfanges verteilten, radial nach innen ragenden Krallenelementen trägt. Eine eingesteckte Fluidleitung wird entlang ihres Außenumfanges von den Krallenelementen haltend beaufschlagt. In dem Einsatzkörper ist ein den Krallenelementen vorgelagertes ringförmiges Löseelement axial verschiebbar gelagert. Zur Entnahme der eingesteckten Fluidleitung wird das Löseelement durch manuelle Beaufschlagung axial verlagert und gegen die Krallenelemente gedrückt, sodass diese vom Außenumfang der eingesteckten Fluidleitung abgehoben werden.

Eine in der DE 693 01 592 T2 beschriebene Anschlussvorrichtung enthält eine in einem Kupplungskörper axial verschiebbar gelagerte Spannhülse, die an ihrem inneren Endabschnitt mehrere Schlitze aufweist, sodass sich radial verschwenkbare Arme ergeben, die jeweils mit einem radial nach innen ragenden Zahn versehen sind. Wird die Spannhülse geringfügig nach axial außen verlagert, werden die Arme durch einen Vorsprung des Kupplungskörpers beaufschlagt und nach innen verschwenkt, sodass die Zähne die eingesteckte Fluidleitung haltend beaufschlagen. Soll die Fluidleitung wieder entnommen werden, drückt man die Spannhülse axial in das Kupplungsstück hinein, sodass die Arme wieder nach außen schwenken und die Fluidleitung freigeben.

Die DE 101 62 657 B4 setzt sich aus einer relativ großen Anzahl von Bauteilen zusammen und ist daher in der Fertigung und Montage entsprechend aufwändig. Die aus der DE 693 01 592 T2 bekannte Anschlussvorrichtung hat demgegenüber zwar den Vorteil, dass die Funktionen des Festhaltens und des Lösens von ein und demselben Bauteil, nämlich der Spannhülse, erfüllt werden. Eine ausreichende Haltekraft wird allerdings nur durch das Zusammenwirken mit dem Kupplungskörper gewährleistet. Da die Zähne bei der axialen Lösebewegung der Spannhülse nur auf Grund des selbstrückstellenden Effektes der Arme nach radial außen bewegt werden, kann überdies das Problem auftreten, dass das Entnehmen einer eingesteckten Fluidleitung erschwert wird.

Es ist die Aufgabe der vorliegenden Erfindung, eine einfach aufgebaute und dennoch funktionssichere Anschlussvorrichtung für Fluidleitungen zu schaffen.

Gelöst wird diese Aufgabe dadurch, dass wenigstens eines der beiden Krallenelemente an dem dem anderen Krallenelement zugewandten Beaufschlagungsabschnitt eine Zentriervertiefung aufweist, die seitlich von zwei nach radial außen hin aufeinander zu laufenden Beaufschlagungskanten begrenzt ist, die geeignet sind, eine eingesteckte Fluidleitung unter gleichzeitiger Zentrierung haltend zu beaufschlagen.

Bei dieser Anschlussvorrichtung werden die Funktionen des Festhaltens und des Lösens einer eingesteckten Fluidleitung von einem einzigen Bauteil in Gestalt des kombinierten Halte- und Löseringes erfüllt. Beim Einstecken einer Fluidleitung werden die sich auf der Hauptachse diametral gegenüberliegenden Klemmelemente nach radial außen gedrückt, sodass sie fortan unter Vorspannung am Außenumfang der Fluidleitung anliegen und diese festhalten. Die Vorspannung resultiert aus einer elastischen Biegeverformung der Krallenelemente und/oder aus einer elastischen radialen Verformung des Halteund Löseringes selbst. Soll eine eingesteckte Fluidleitung wieder entnommen werden, ergreift man den Halte- und Lösering zwischen zwei Fingern einer Hand und drückt ihn quer und insbesondere rechtwinkelig zu der die Krallenelemente beinhaltenden Hauptachse zusammen, was in der Richtung der Hauptachse eine Aufweitung der Einstecköffnung zur Folge hat, verbunden mit einer Vergrößerung des zwischen den Krallenelementen vorhandenen Abstandes, sodass diese aktiv vom Außenumfang der Fluidleitung abgehoben werden und letztere mühelos und ohne Beschädigungsgefahr wieder herausgezogen werden kann.

Es ist von Vorteil, dass wenigstens eines der beiden sich diametral gegenüberliegenden Krallenelemente so ausgebildet ist, dass es eine zentrierende Wirkung auf die eingesteckte Fluidleitung ausübt. Es weist zu diesem Zweck an seinem dem anderen Krallenelement zugewandten Beaufschlagungsabschnitt eine Zentriervertiefung auf, die seitlich von zwei sich nach radial außen hin einander annähernden Beaufschlagungskanten begrenzt ist, die an in Umfangsrichtung beabstandeten Stellen an der radial ein Stück weit in die Zentriervertiefung eintauchenden Fluidleitung anliegen.

Vorteilhafte Weiterbildungen der Erfindung gehen aus den Unteransprüchen hervor.

Der Halte- und Lösering kann aus Kunststoffmaterial bestehen. In einer bevorzugten Bauform besteht er aus Material mit gummielastischen Eigenschaften, insbesondere einem Elastomermaterial. Die Krallenelemente bestehen in diesem Zusammenhang zweckmäßigerweise aus Metall und können zur ringseitigen Fixierung mit einem Befestigungsabschnitt in den Halte- und Lösering eingebettet sein. Das Einbetten kann im Rahmen einer Spritzgießherstellung stattfinden.

Es besteht auch die Möglichkeit, die Krallenelemente einstückig mit dem Halte- und Lösering zu verbinden. Diese Bauform empfiehlt sich insbesondere für eine Metallausführung.

Der Halte- und Lösering ist zweckmäßigerweise von einem axialen Endabschnitt eines länglichen Hohlkörpers gebildet. Dieser Hohlkörper kann hülsenförmig ausgebildet sein. Besteht er aus gummielastischen Eigenschaften kann es sich praktisch um eine Art Schlauchkörper handeln.

Insbesondere bei einer Metallausführung kann der Hohlkörper einen zu dem Halte- und Lösering koaxialen und axial beabstandeten Befestigungsring aufweisen, der über zwei axiale Verbindungsstege mit dem Halte- und Lösering verbunden ist, wobei die Verbindungsstege am Halte- und Lösering zweckmäßigerweise von den beiden sich diametral gegenüberliegenden Beaufschlagungsabschnitten ausgehen, an denen die zum Freigeben der eingesteckten Fluidleitung erforderliche manuelle Beaufschlagung vorgenommen wird. Über den Befestigungsring kann der Hohlkörper an einem zugeordneten Tragkörper befestigt werden, bei dem es sich beispielsweise um einen unmittelbaren Bestandteil einer fluidtechnischen Komponente handelt oder um eine individuelle Komponente, wenn die Anschlussvorrichtung als Anschlussstück ausgeführt ist.

Unabhängig von der konkreten Ausgestaltung des Hohlkörpers kann dessen rückseitiger axialer Endabschnitt zur Befestigung an einem Tragkörper ausgebildet sein, wobei er zu diesem Zweck vorzugsweise mit auf den Tragkörper abgestimmten Verankerungsmitteln ausgestattet ist.

Zwischen dem Hohlkörper und dem Tragkörper ist insbesondere eine Steckverbindung vorgesehen. Der Hohlkörper kann in eine Ausnehmung des Tragkörpers eingesteckt oder auf einen Fortsatz des Tragkörpers aufgesteckt sein.

Sind zwei mit einer Zentriervertiefung versehene Krallenelemente vorhanden, ergibt sich eine Vierfachabstützung der eingesteckten Fluidleitung. Möglich ist allerdings auch eine voneinander abweichende Gestaltung der beiden Krallenelemente, wobei das zweite Krallenelement insbesondere eine tangential zum Außenumfang der eingesteckten Fluidleitung verlaufende Beaufschlagungskante aufweisen kann, was insgesamt eine über den Leitungsumfang verteilte Dreifachabstützung zur Folge hat.

Es sind Einsatzfälle denkbar, bei denen die radiale Zugänglichkeit des Halte- und Löseringes erschwert ist. Für solche Fälle ist es von Vorteil, wenn an jedem Krallenelement ein an der Vorderseite axial aus dem kombinierten Halte- und Lösering herausragendes Betätigungselement angeordnet ist, das manuell axial beaufschlagt werden kann, um ohne direkte radiale Verformung des Halte- und Löseringes ein Verschwenken der Krallenelemente mit daraus resultierendem Abheben vom Außenumfang der Fluidleitung herbeizuführen.

Nachfolgend wird die Erfindung anhand der beiliegenden Zeichnung näher erläutert. In dieser zeigen:
- Figur 1: eine bevorzugte Ausführungsform der erfindungsgemäßen Anschlussvorrichtung im Längsschnitt mit einer Schnittebene gemäß Schnittlinie I-I aus Figur 3,
- Figur 2: die Anschlussvorrichtung aus Figur 1 im Längsschnitt mit einer um 90° versetzten Schnittebene gemäß Schnittlinie II-II aus Figur 3, wobei abweichend von Figur 1 die eingesteckte Fluidleitung nicht abgebildet ist,
- Figur 3: eine Draufsicht auf die Anschlussvorrichtung mit Blickrichtung gemäß Pfeil III aus Figur 1 im festgeklemmten Zustand einer eingesteckten Fluidleitung,
- Figur 4: eine mit Figur 3 vergleichbare Stirnansicht der Anschlussvorrichtung bei zum Zwecke des Entnehmens der eingesteckten Fluidleitung manuell zusammengedrücktem Halte- und Lösering,
- Figuren 5 und 6: perspektivische Einzeldarstellungen des Halte- und Löseringes mit und ohne eingesteckte Fluidleitung,
- Figur 7: ein weiteres Ausführungsbeispiel der erfindungsgemäßen Anschlussvorrichtung, teilweise im Längsschnitt,
- Figuren 8 und 9: den bei der Anschlussvorrichtung der Figur 7 vorhandenen, den Halte- und Lösering definierenden Hohlkörper in perspektivischer Einzeldarstellung mit und ohne eingesteckte Fluidleitung,
- Figur 10: eine alternative Bauform eines mit einem Halte- und Lösering ausgestatteten Hohlkörpers in perspektivischer Einzeldarstellung,
- Figur 11: in perspektivischer Einzeldarstellung eine weitere Ausführungsform eines den Halte- und Lösering definierenden Hohlkörpers mit zusätzlichen Befestigungselementen zur optionalen stirnseitigen Betätigung der Krallenelemente,
- Figur 12: die Anordnung aus Figur 11 in einer Seitenansicht gemäß Pfeil XII aus Figur 11, und
- Figur 13: die Anordnung aus Figuren 11 und 12 in einer Draufsicht gemäß Pfeil XIII aus Figur 12.

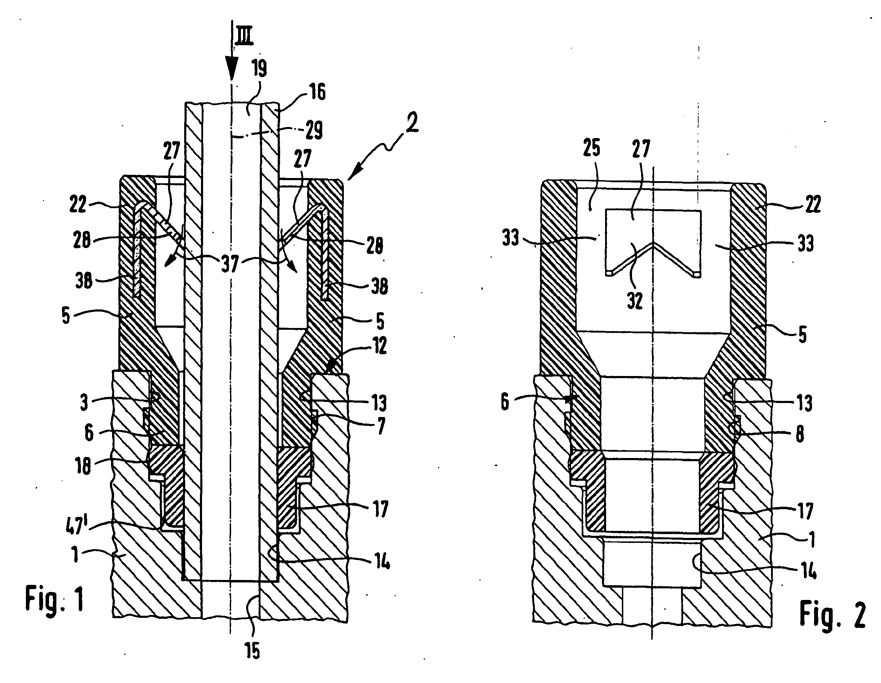

Die Figuren 1 bis 4 zeigen jeweils den Ausschnitt eines Tragkörpers 1, der mit einer erfindungsgemäßen Anschlussvorrichtung 2 bevorzugten Aufbaus bestückt ist. Bei dem Tragkörper 1 handelt es sich um einen unmittelbaren Bestandteil einer im Detail nicht weiter dargestellten fluidtechnischen Komponente, beispielsweise um die Wandung des Gehäuses eines Ventils, eines fluidbetätigten Antriebes, eines Druckluft-Wartungsgerätes oder eines Druckluftspeichers, wobei diese Aufzählung als nicht abschließend anzusehen ist.

Der Tragkörper der Figuren 1 bis 4 ist mit einer kreiszylindrischen, in axialer Richtung bevorzugt ein oder mehrmals abgestuften Aufnahme 3 versehen, in die die Anschlussvorrichtung 2 axial im Wesentlichen unbeweglich eingesteckt ist.

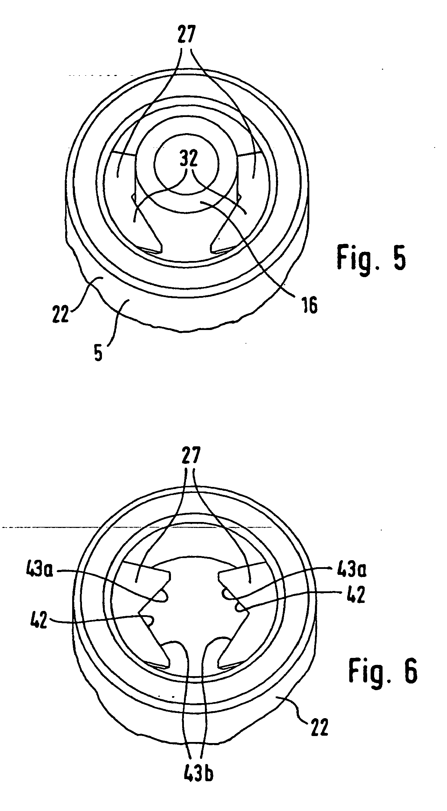

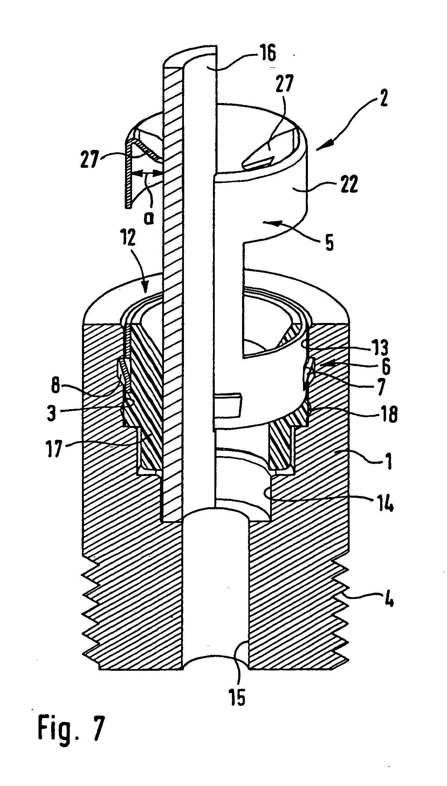

Während sich bei der Bauform der Figuren 1 bis 6 ein gesonderter Tragkörper für die Anschlussvorrichtung 2 erübrigt, weil eine mit der Anschlussvorrichtung 2 auszustattende fluidtechnische Komponente unmittelbar selbst als Tragkörper fungiert, zeigt die Figur 7 eine Variante, bei der der Tragkörper 1 von vorneherein einen festen Bestandteil der Anschlussvorrichtung 2 bildet. In diesem Fall handelt es sich bei dem Tragkörper 1 zweckmäßigerweise um einen individuellen Gehäusekörper, der über exemplarisch als Gewinde ausgebildete Anschlussmittel 4 verfügt, über die eine Befestigung an einer daran angepassten Schnittstelle einer nicht weiter dargestellten fluidtechnischen Komponente möglich ist.

Allen Ausführungsbeispielen der Anschlussvorrichtung 2 ist das Vorhandensein eines von Fall zu Fall unterschiedlich gestalteten länglichen Hohlkörpers 5 gemeinsam, dessen axialer rückseitiger Endabschnitt 6 ausgebildet ist, um am zugeordneten Tragkörper 1 fixiert werden zu können. Bei allen Ausführungsbeispielen ist der Hohlkörper 5 mit seinem rückseitigen Endabschnitt 6 voraus ein Stück weit in die schon erwähnte Aufnahme 3 des Tragkörpers 1 eingesteckt und über am Außenumfang des rückseitigen Endabschnittes 6 vorhandene Verankerungsmittel 7 derart am Tragkörper 1 verankert, dass ein axiales Herausziehen aus der Aufnahme 3 verhindert ist.

Die Verankerungsmittel 7 greifen insbesondere verrastend in eine am Innenumfang der Aufnahme 3 ausgebildete Verankerungsnut 8 ein. Bei den Verankerungsmitteln 7 kann es sich um mehrere entlang des Umfanges des bevorzugt hohlzylindrischen rückseitigen Endabschnittes 6 verteilte Verankerungsvorsprünge handeln, wie dies aus Figuren 7 bis 13 hervorgeht, oder aber um einen in sich geschlossenen Ringvorsprung, wie er exemplarisch aus Figuren 1 und 2 hervorgeht.

Die Aufnahme 3 enthält einen sich an die Außenfläche 12 des Tragkörpers 1 anschließenden Aufnahmeabschnitt 13, der den rückseitigen Endabschnitt 6 des Hohlkörpers 5 aufnimmt und der zweckmäßigerweise auch die Verankerungsnut 8 enthält. Auf eine solche Verankerungsnut kann im Übrigen bei allen Ausführungsbeispielen verzichtet werden, wenn gewährleistet ist, dass der Hohlkörper 5 allein durch Einpressen in der Aufnahme 3 fixierbar ist. Auf diese Weise kann der Aufnahmeabschnitt 13 glattflächig sein und bedarf keiner besonderen Bearbeitung. In Verbindung mit einer Befestigung durch einen Presssitz ist es allerdings gleichwohl empfehlenswert, am Außenumfang des rückseitigen Endabschnittes 6 einen oder mehrere Vorsprünge vorzusehen, die sich in die Wandung der Aufnahme 3 eingraben können, um eine formschlüssige Fixierung zu erreichen.

Das innere axiale Ende der Aufnahme 3 ist von einem bezüglich dem Aufnahmeabschnitt 13 einen geringeren Querschnitt aufweisenden Zentrierabschnitt 14 gebildet, an den sich ein den Tragkörper 1 durchsetzender Fluidkanal 15 anschließt.

Eine angeschlossene Fluidleitung 16 durchsetzt den Hohlkörper 5 koaxial und taucht mit ihrem Endabschnitt unter radialer Abstützung in den Zentrierabschnitt 14 ein, dessen Durchmesser dem Außendurchmesser der Fluidleitung 16 entspricht oder geringfügig größer ist. Auf diese Weise ergibt sich eine fluidische Verbindung zwischen dem in der Fluidleitung 16 verlaufenden Leitungskanal 19 und dem Fluidkanal 15 des Tragkörpers 1.

Dem rückseitigen Endabschnitt 6 des Hohlkörpers 5 ist ein koaxial angeordneter Dichtungsring 17 zugeordnet. Dieser kann sich vollständig außerhalb des Hohlkörpers 5 befinden und dessen rückseitigem Endabschnitt 6 koaxial nachgeordnet sein, wie dies in Figuren 1 und 2 gezeigt ist. Alternativ besteht allerdings auch die Möglichkeit, dass der Dichtungsring 17 ein Stück weit von der Rückseite her in den Hohlkörper 5 eintaucht und entlang eines Längenabschnittes von dem hohlzylindrischen rückseitigen Endabschnitt 6 umschlossen wird. Dies ist bei dem Ausführungsbeispiel der Figur 7 der Fall. In allen Fällen verfügt der Dichtungsring 17 axial außerhalb des Hohlkörpers 5 am Außenumfang über einen umlaufenden Dichtungsabschnitt 18, der dichtend an der Innenumfangsfläche der Aufnahme 3 und insbesondere des Aufnahmeabschnittes 13 anliegt. Mit seinem Innenumfang liegt der Dichtungsring 17 unter Abdichtung am Außenumfang der eingesteckten Fluidleitung 16 an.

Der Dichtungsring 17 ist auf der axial innerhalb des Dichtungsabschnittes 18 liegenden Seite zweckmäßigerweise mit gegenüber der dortigen Umfangskontur der Aufnahme 3 geringerem Außendurchmesser ausgebildet, sodass sich ein Ringspalt 47' einstellt. Das zwischen dem Leitungskanal 19 der eingesteckten Fluidleitung 16 und dem Fluidkanal 15 überströmende Druckmedium - beispielsweise Druckluft - ist somit in der Lage, den die Fluidleitung 16 manschettenartig umschließenden Dichtungsring 17 radial außen zu beaufschlagen und gegen den Außenumfang der Fluidleitung 16 drücken. Auf diese Weise ergibt sich eine druckunterstützte Abdichtwirkung des Dichtungsringes 17.

Der axial außerhalb der Aufnahme 3 liegende vordere Endabschnitt des Hohlkörpers 5, der hohlzylindrisch mit kreisförmigem Querschnitt ausgebildet ist, bildet einen kombinierten Halte- und Lösering 22. Er vereinigt in sich die Funktionen des Festhaltens einer eingesteckten Fluidleitung 16 und des Lösens derselben, wenn eine Entnahme aus der Anschlussvorrichtung 2 gewünscht ist.

Der Halte- und Lösering 22 ist bei allen Ausführungsbeispielen ein einstückiger Bestandteil des Hohlkörpers 5. Beim Ausführungsbeispiel der Figuren 1 bis 6 besteht er, wie der gesamte Hohlkörper 5, aus einem gummielastische Eigenschaften aufweisenden Kunststoffmaterial, insbesondere einem Elastomermaterial. Es handelt sich um eine hülsenartige Gestaltung, wobei man auf Grund der Elastizität auch von einem Schlauchkörper sprechen könnte.

Bei den anderen Ausführungsbeispielen besteht der Halte- und Lösering 22, wie der gesamte Hohlkörper 5, aus Metall mit federnden Eigenschaften, insbesondere aus einem Federstahl. Abweichend von der Bauform der Figuren 1 bis 6 ist der Hohlkörper 5 hierbei umfangsseitig nicht komplett geschlossen, sondern verfügt über zwei sich diametral sich gegenüberliegende bogenförmige fensterartige Aussparungen 23. Auf diese Weise ergibt sich eine Struktur, bei der der hohlzylindrische Halte- und Lösering 22 mit dem ebenfalls hohlzylindrisch ausgebildeten ringförmigen rückseitigen Endabschnitt 6 über zwei sich diametral gegenüberliegende und axial verlaufende streifenartige Verbindungsstege 24 fest verbunden ist. Auf Grund seiner Befestigungsfunktion bezüglich des Tragkörpers 1 kann der rückseitige Endabschnitt 6 auch als Befestigungsring bezeichnet werden.

Die vom Halte- und Lösering 22 umgrenzte Öffnung bildet eine Einstecköffnung 25, durch die hindurch die anzuschließende Fluidleitung 16 in die Anschlussvorrichtung 2 eingesteckt wird. Im angeschlossenen Zustand wird die Fluidleitung 16 vom Halte- und Lösering 22 mit radialem Abstand "a" koaxial umschlossen. Es ergibt sich dann zwischen der Fluidleitung 16 und dem Halte- und Lösering 22 ein ringförmiger Zwischenraum 26 mit einer dem radialen Abstand "a" entsprechenden Breite.

Der Halte- und Lösering 22 trägt zwei sich diametral gegenüberliegende Krallenelemente 27, die nach radial innen in die Einstecköffnung 25 hineinragen. Sie liegen auf einer als Hauptachse 28 bezeichneten gedachten linearen Achse, die rechtwinkelig zur als Ring-Längsachse 29 bezeichneten Längsachse des Halte- und Löseringes 22 verläuft.

Jedes Krallenelement 27 endet an seiner nach radial innen orientierten, der Ring-Längsachse 29 zugewandten Innenseite mit einem flachen Beaufschlagungsabschnitt 32. Dieser liegt bei eingesteckter Fluidleitung 16 unter radialer Vorspannung am Außenumfang der Fluidleitung 16 an, sodass diese festgehalten ist und nicht ungewollt wieder herausgezogen werden kann.

Die Krallenelemente 27 überbrücken jeweils den Zwischenraum 26. Ihre rechtwinkelig zur Ring-Längsachse 29 und zur Hauptachse 28 gemessene Breite entspricht etwa dem Außendurchmesser der Fluidleitung 16 und ist zweckmäßigerweise geringfügig größer als dieser.

Weitere als die beiden auf der gemeinsamen Hauptachse 28 liegenden Krallenelemente 27 sind nicht vorhanden. Es fehlen insbesondere solche Krallenelemente, die quer zu der Hauptachse 28 auf die Fluidleitung 16 einwirken. Somit bleibt der Zwischenraum 26 in den beiden sich quer zur Hauptachse 28 gegenüberliegenden Zwischenraumabschnitten 33 frei.

Die beiden die freien Zwischenraumabschnitte 33 radial außen umfangsseitig begrenzenden Abschnitte des Halte- und Löseringes 22 bilden für das Entnehmen der Fluidleitung 16 relevante Betätigungsabschnitte 34. Sie liegen auf einer zur Ring-Längsachse 29 und auch zur Hauptachse 28 rechtwinkeligen, gedachten Betätigungsachse 35.

Indem der Halte- und Lösering 22 aus federndem Material besteht, beispielsweise Federmetall oder gummielastischer Werkstoff, verfügt er insbesondere in radialer Richtung über federelastische Eigenschaften. Dies nutzt man zur Freigabe der Fluidleitung 16 für den Fall, dass sie wieder aus der Anschlussvorrichtung 2 entnommen werden soll.

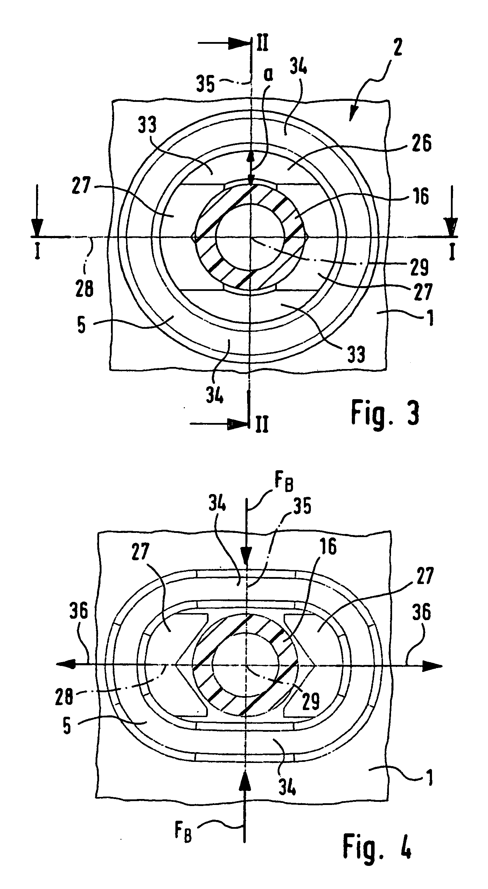

Um eine eingesteckte Fluidleitung 16 vom Haltegriff der Krallenelemente 27 freizusetzen, wird der Halte- und Lösering 22, beispielsweise zwischen zwei Fingern einer Hand, in Richtung der Betätigungsachse 35 zusammengedrückt. Die in Figur 4 durch Pfeile angedeuteten Betätigungskräfte F_{B} werden hierbei in die beiden Betätigungsabschnitte 34 eingeleitet, die auf Grund der zwischen ihnen und der Fluidleitung 16 vorhandenen freien Zwischenraumabschnitte 33 um einen Betrag verformbar sind, der im Wesentlichen dem oben erwähnten radialen Abstand "a" entspricht.

Diese Verformung, bei der die Betätigungsabschnitte 34 aus einer stärker gekrümmten in eine weniger stärker gekrümmte oder ungekrümmte Gestalt verformt werden, führt zu einer radialen Aufweitung des Halte- und Löseringes 22 in der Richtung der Hauptachse 28. Die die Krallenelemente 27 tragenden Ringabschnitte entfernen sich voneinander und nehmen die Krallenelemente 27 gemäß Pfeilen 36 mit, sodass sie vom Außenumfang der Fluidleitung 16 abgehoben werden. Der hieraus resultierende betätigte Zustand ist aus Figur 4 gut ersichtlich.

Die nicht mehr von den Krallenelementen 27 festgehaltene Fluidleitung 16 kann somit aus der Anschlussvorrichtung 2 herausgezogen werden.

Nimmt man die Betätigungskräfte F_{B} wieder weg, kehrt der Halte- und Lösering 22 auf Grund der elastischen Rückstellkräfte selbsttätig in seinen beispielsweise aus Figur 3 ersichtlichen unverformten Ausgangszustand zurück, wobei dann auch die Krallenelemente 27 wieder näher beieinander liegen.

Die Krallenelemente 27 sind zweckmäßigerweise so ausgebildet, dass sie mit dem erwähnten Beaufschlagungsabschnitt 32 vom Innenumfang des Halte- und Löseringes 22 nach radial innen in die Einstecköffnung 25 hineinragen, also vom Halte- und Lösering 22 umschlossen sind.

Die Beaufschlagungsabschnitte 32 haben zweckmäßigerweise zu ihrem freien Ende hin einen radial nach innen und zugleich axial nach innen gerichteten schrägen Verlauf. Im Ausgangszustand bei nicht eingesteckter Fluidleitung 16 ist der zwischen den beiden Beaufschlagungsabschnitten 32 vorhandene Abstand etwas geringer als der Durchmesser der Fluidleitung 16, sodass diese beim Einstecken mit ihrer Stirnfläche auf die Beaufschlagungsabschnitte 32 auftrifft. Zweckmäßigerweise besitzen die Krallenelemente 27 federelastische Eigenschaften, sodass sie beim weiteren Einstecken der Fluidleitung 7 an ihrem Beaufschlagungsabschnitt 32 relativ zum Halte- und Lösering 22 gemäß Pfeilen 37 nach außen gebogen werden, um anschließend mit der daraus resultierenden Rückstellkraft gegen den Außenumfang der hindurchgesteckten Fluidleitung 16 anzudrücken. Wirken im anschließenden Betrieb irgendwelche nach axial außen gerichteten Kräfte auf die Fluidleitung 16 ein, wird der Haltegriff verstärkt, weil sich die Betätigungsabschnitte 34 zwischen dem Halte- und Lösering 22 und der Wandung der Fluidleitung 16 verkeilen.

Die das Einführen der Fluidleitung 16 ermöglichende Aufweitung des zwischen den Beaufschlagungsabschnitten 32 definierten Zwischenraumes 26 kann alternativ oder zusätzlich auch durch die Federelastizität des Halte- und Löseringes 32 ermöglicht werden. In diesem Fall weitet sich der Halte- und Lösering 22 durch die beim Einstecken der Fluidleitung 16 auf die Krallenelemente 27 ausgeübten Kräfte in der Richtung der Hauptachse 28 geringfügig auf, um das Hindurchstecken der Fluidleitung 16 zu ermöglichen.

Die Krallenelemente 27 bestehen zweckmäßigerweise bei allen Ausführungsbeispielen aus Metall, insbesondere Federstahl. Besteht auch der Halte- und Lösering 22 aus Metall, sind die Krallenelemente 27 vorzugsweise einstückig mit dem Halte- und Lösering 22 ausgebildet, wie dies beim Ausführungsbeispiel der Figuren 7 bis 13 der Fall ist. Der Hohlkörper kann dann einschließlich der Krallenelemente 27 ein aus Metall bestehendes Stanz-Biegeteil sein.

Bei nicht metallischem Halte- und Lösering 22 sind die Krallenelemente 27 zweckmäßigerweise mit einem rückseitigen Befestigungsabschnitt 38 in das Material des Halte- und Löseringes 22 eingebettet. Die Herstellung erfolgt zweckmäßigerweise durch Spritzgießen, wobei die Krallenelemente 27 vor dem Einspritzen des Kunststoffmaterials als Einlegeteile in der Spritzgießform platziert werden, sodass ihre Befestigungsabschnitte 38 von dem Kunststoffmaterial umschlossen werden.

Bei der aus Figuren 7 bis 13 ersichtlichen Metallausführung sind die beiden Verbindungsstege 24 zweckmäßigerweise an je einem der beiden Betätigungsabschnitte 34 des Halte- und Löseringes 22 angebracht.

Zur Befestigung des Hohlkörpers 5 an einem Tragkörper 1 sei noch nachzutragen, dass der Hohlkörper 5 alternativ zu einem Einstecken in eine Ausnehmung des Tragkörpers 1 auch auf einen dafür vorgesehenen Fortsatz des Tragkörpers 1 aufgesteckt werden könnte. Die gegebenenfalls vorhandenen Verankerungsmittel 7 befinden sich in diesem Falle zweckmäßigerweise am Innenumfang des rückseitigen Endabschnittes 6.

Zweckmäßigerweise dienen die Krallenelemente 27 auch zum zentrieren der eingesteckten Fluidleitung 16 bezüglich dem Halte- und Lösering 22. In diesem Zusammenhang sind bei den Ausführungsbeispielen der Figuren 1 bis 9 und 11 bis 13 beide Klemmelemente 27 identisch ausgebildet und an ihrem dem jeweils anderen Krallenelement 27 zugewandten Beaufschlagungsabschnitt mit einer zur eingesteckten Fluidleitung 16 hin offenen Zentriervertiefung 42 versehen. Diese Zentriervertiefung 42 ist seitlich von zwei nach radial außen hin insbesondere schräg aufeinander zu laufenden Beaufschlagungskanten 43a, 43b begrenzt, die die Fluidleitung 16 an in Umfangrichtung beabstandeten Stellen beaufschlagen. Gleichzeitig kann die Fluidleitung 16 in radialer Richtung ein Stück weit in die jeweilige Zentriervertiefung 42 eintauchen. Auf diese Weise ist gewährleistet, dass die Fluidleitung 16 auch dann sicher festgehalten wird, wenn auf ihren außerhalb der Anschlussvorrichtung 2 liegenden Längenabschnitt irgendwelche Querkräfte ausgeübt werden.

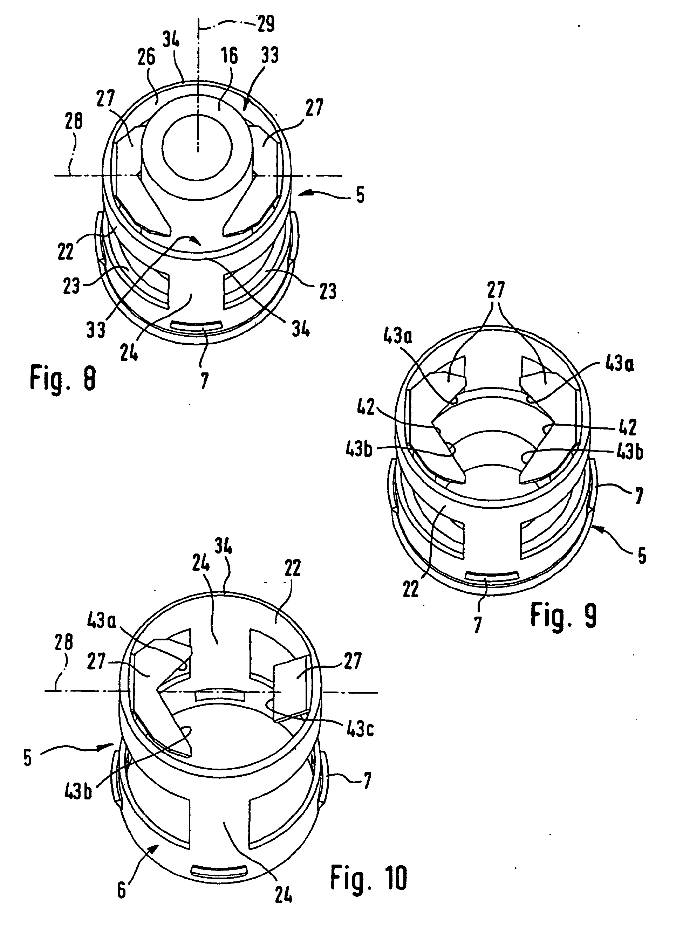

Während bei den anderen Ausführungsbeispielen somit eine Vier-Punkt-Abstützung der Fluidleitung 16 durch die Krallenelemente 27 stattfindet, zeigt die Figur 10 ein abgewandeltes Ausführungsbeispiel mit einer Drei-Punkt-Abstützung. Hier ist eines der Krallenelemente 27 in der soeben geschilderten Bauweise mit einer Zentriervertiefung 42 und randseitigen Beaufschlagungskanten 43a, 43b versehen, während das gegenüberliegende Krallenelement 27 eine bezüglich dem Außenumfang der eingesteckten Fluidleitung 16 tangential verlaufende Beaufschlagungskante 43c besitzt. Durch dieses Krallenelement 27 wird die Fluidleitung in die gegenüberliegende Zentriervertiefung 42 hineingedrückt und ebenfalls zentriert.

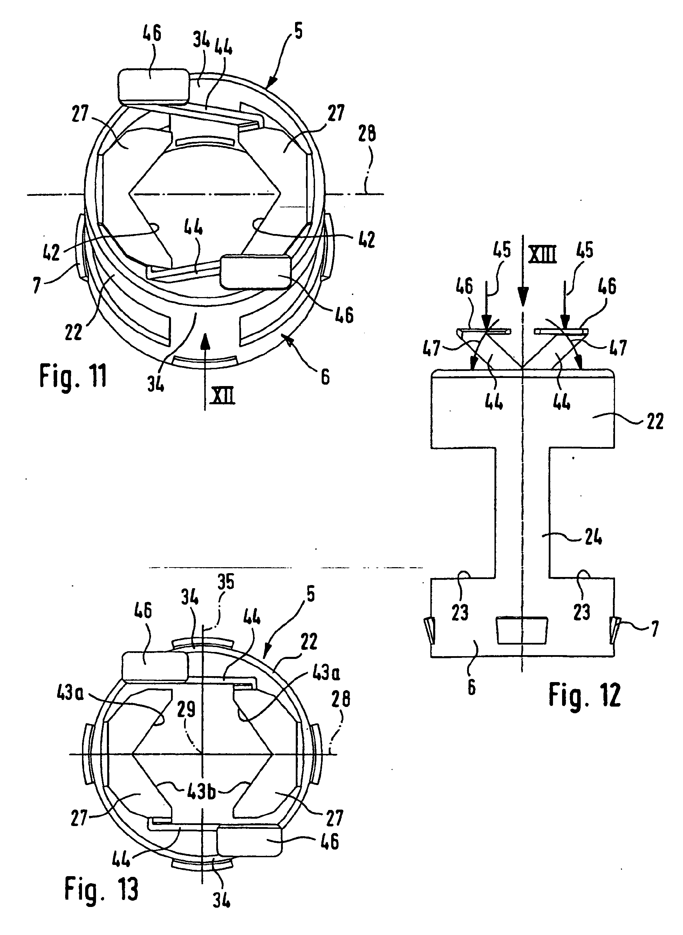

In Figuren 11 bis 13 ist anhand einer optionalen Metallausführung eine zusätzliche Ausstattungsmöglichkeit des Halte- und Löseringes 22 gezeigt, die ein einfaches Lösen der festgehaltenen Fluidleitung 16 auch dann ermöglicht, wenn die Betätigungsabschnitte 34 einmal von radial außen her nicht zugänglich sein sollten. Für diesen Fall ist hier eine Lösebetätigung der Krallenelemente 27 von der vorderen Stirnseite des Halte- und Löseringes 22 her möglich.

In diesem Zusammenhang ist an jedem der beiden Krallenelemente 27 ein Betätigungselement 44 angebracht, das an der Vorderseite des Halte- und Löseringes 22 aus der Einstecköffnung 25 herausragt. Durch manuelle Beaufschlagung der dem Halte- und Lösering 22 mit Abstand vorgelagerten Betätigungselemente 44 gemäß Pfeilen 45 in axialer, zum Halte- und Lösering 22 hin orientierter Richtung wird ein Drehmoment auf die verschwenkbar am Hohlkörper 5 gelagerten Krallenelemente 27 ausgeübt, sodass sie vom Außenumfang der Fluidleitung 16 abheben.

Um trotz rein axialer Beaufschlagung der Betätigungselemente 44 ein hohes Drehmoment zu erzielen, besitzen die Betätigungselemente 44 ausgehend von den Krallenelementen 27 jeweils einen schrägen Verlauf. In einer Vorderansicht gemäß Pfeil XIII gesehen sind somit die zu beaufschlagenden Endabschnitte 46 der Betätigungselemente 44 in der Richtung der Hauptachse 28 versetzt zum jeweils zugeordneten Krallenelement 27 angeordnet. Bei der Betätigung beschreibt ein jeweiliger Endabschnitt 46 einen leichten Bogen um den Anlenkpunkt der verschwenkbaren Krallenelemente 27, wie dies durch Pfeile 47 in Figur 12 angedeutet ist.

Zweckmäßigerweise greift an jedem Krallenelement 27 seitlich ein insbesondere einstückig angeformtes Betätigungselement 44 an. Dabei befinden sich die Betätigungselemente 44 der beiden Krallenelemente 27 zweckmäßigerweise auf einander entgegengesetzten Seiten, sodass sie sich ohne gegenseitige Behinderung im Rahmen ihres schrägen Längsverlaufes überkreuzen können.

Um die Betätigungsabschnitte 34 des Halte- und Löseringes 42 in Abhängigkeit vom Anwendungsfall jeweils in eine für die Betätigung griffgünstige Lage verbringen zu können, ist es von Vorteil, wenn der Halte- und Lösering 22 und insbesondere der gesamte Hohlkörper 45 bezüglich der Ring-Längsachse 29 verdrehbar am zugeordneten Tragkörper 1 fixiert ist. Diese Ausrichtungsmöglichkeit ist vor allem dann von Vorteil, wenn mehrere Anschlussvorrichtungen 2 auf engstem Raum in unmittelbarer Nachbarschaft zueinander angeordnet sind, beispielsweise an einer Ventilbatterie.

## Patentansprüche

1. Anschlussvorrichtung für eine Fluidleitung, mit einem eine Einstecköffnung (25) für eine Fluidleitung (16) umschließenden kombinierten Halte- und Lösering (22), der auf einer zur Ring-Längsachse (29) rechtwinkeligen Hauptachse (28) zwei sich diametral gegenüberliegende, nach radial innen ragende Krallenelemente (27) trägt, die geeignet sind, eine eingesteckte Fluidleitung (16) umfangsseitig von entgegengesetzten Seiten her unter Vorspannung haltend zu beaufschlagen, und der derart federelastisch verformbar ausgebildet ist, dass er sich zum Lösen einer festgehaltenen Fluidleitung (16) manuell quer zu der Hauptachse (28) ein Stück weit zusammendrücken lässt, woraus gleichzeitig in der Richtung der Hauptachse (28) ein gegenseitiges voneinander Entfernen der sich gegenüberliegenden Krallenelemente (27) unter Freigabe einer dazwischen angeordneten Fluidleitung (16) resultiert, **dadurch gekennzeichnet, dass** wenigstens eines der beiden Krallenelemente (27) an dem dem anderen Krallenelement (27) zugewandten Beaufschlagungsabschnitt (32) eine Zentriervertiefung (42) aufweist, die seitlich von zwei nach radial außen hin aufeinander zu laufenden Beaufschlagungskanten (43a, 43b) begrenzt ist, die geeignet sind, eine eingesteckte Fluidleitung (16) unter gleichzeitiger Zentrierung haltend zu beaufschlagen.

2. Anschlussvorrichtung nach Anspruch 1, **dadurch gekennzeichnet, dass** der Halte- und Lösering (22) aus Kunststoffmaterial besteht.

3. Anschlussvorrichtung nach Anspruch 1 oder 2, **dadurch gekennzeichnet, dass** der Halte- und Lösering (22) aus Material mit gummielastischen Eigenschaften besteht, insbesondere aus Elastomermaterial.

4. Anschlussvorrichtung nach Anspruch 2 oder 3, **dadurch gekennzeichnet, dass** die Krallenelemente (27) aus Metall, insbesondere Federstahl, bestehen und zur Fixierung am Halte- und Lösering (22) mit einem Befestigungsabschnitt (38) in den Halte- und Lösering (22) eingebettet sind.

5. Anschlussvorrichtung nach Anspruch 1, **dadurch gekennzeichnet, dass** der Halte- und Lösering (22) und die Krallenelemente (27) aus Metall mit federnden Eigenschaften bestehen und einstückig miteinander ausgebildet sind.

6. Anschlussvorrichtung nach einem der Ansprüche 1 bis 5, **dadurch gekennzeichnet, dass** der Halte- und Lösering (22) von einem axialen Endabschnitt eines länglichen Hohlkörpers (5) gebildet ist.

7. Anschlussvorrichtung nach Anspruch 6, **dadurch gekennzeichnet, dass** der Hohlkörper (5) einstückig ausgebildet ist.

8. Anschlussvorrichtung nach Anspruch 6 oder 7, **dadurch gekennzeichnet, dass** der Hohlkörper (5) hülsenförmig ausgebildet ist.

9. Anschlussvorrichtung nach einem der Ansprüche 6 bis 8, **dadurch gekennzeichnet, dass** der Hohlkörper (5) aus gummielastischem Material besteht.

10. Anschlussvorrichtung nach einem der Ansprüche 6 bis 9, **dadurch gekennzeichnet, dass** der Hohlkörper (5) einen zu dem Halte- und Lösering (22) koaxialen, axial beabstandeten Befestigungsring (6) aufweist, der über zwei axiale Verbindungsstege (24) mit dem Halte- und Lösering (22) verbunden ist, wobei die Verbindungsstege (24) von zum Lösen der eingesteckten Fluidleitung (16) manuell zu beaufschlagenden Betätigungsabschnitten (34) des Halte- und Löseringes (22) ausgehen.

11. Anschlussvorrichtung nach Anspruch 10, **dadurch gekennzeichnet, dass** der Hohlkörper (5) aus Metall mit federnden Eigenschaften besteht.

12. Anschlussvorrichtung nach Anspruch 11, **dadurch gekennzeichnet, dass** der Hohlkörper (5) einschließlich der Krallenelemente (27) ein Stanz-Biegeteil ist.

13. Anschlussvorrichtung nach einem der Ansprüche 6 bis 12, **dadurch gekennzeichnet, dass** der dem Halte- und Lösering (22) entgegengesetzte rückseitige axiale Endabschnitt (6) des Hohlkörpers (5) an einem Tragkörper (1) befestigt oder zur Befestigung an einem Tragkörper (1) ausgebildet ist.

14. Anschlussvorrichtung nach Anspruch 13, **dadurch gekennzeichnet, dass** der Hohlkörper (5) an seinem rückseitigen axialen Endabschnitt (6) über Verankerungsmittel (7) zur formschlüssigen Verankerung an dem Tragkörper (1) verfügt.

15. Anschlussvorrichtung nach Anspruch 13 oder 14, **dadurch gekennzeichnet, dass** der Hohlkörper (5) zum rückseitigen Einstecken in eine Ausnehmung (3) des Tragkörpers (1) oder zum rückseitigen Aufstecken auf einen Fortsatz des Tragkörpers (1) ausgebildet ist.

16. Anschlussvorrichtung nach einem der Ansprüche 13 bis 15, **dadurch gekennzeichnet, dass** der Tragkörper (1) ein unmittelbarer Bestandteil einer fluidtechnischen Komponente ist, beispielsweise eines Ventils oder eines fluidbetätigten Antriebes.

17. Anschlussvorrichtung nach einem der Ansprüche 13 bis 15, **dadurch gekennzeichnet, dass** der Hohlkörper (5) von einem individuellen Tragkörper (1) getragen ist, der über Anschlussmittel (4) zur Befestigung an einer fluidtechnischen Komponente verfügt.

18. Anschlussvorrichtung nach einem der Ansprüche 6 bis 17, **dadurch gekennzeichnet, dass** dem rückseitigen Endbereich des Hohlkörpers (5) ein die eingesteckte Fluidleitung (16) dichtend umschließender Dichtungsring (17) zugeordnet ist.

19. Anschlussvorrichtung nach einem der Ansprüche 1 bis 18, **gekennzeichnet durch** zwei sich diametral gegenüberliegende Krallenelemente (27) identischen Aufbaus, mit jeweils einer von zwei schräg aufeinander zu laufenden Beaufschlagungskanten (43a, 43b) begrenzten Zentriervertiefung (42).

20. Anschlussvorrichtung nach einem der Ansprüche 1 bis 18, **dadurch gekennzeichnet, dass** die beiden Krallenelemente (27) unterschiedlich ausgebildet sind, wobei das eine Krallenelement (27) eine von zwei schräg aufeinander zu laufenden Beaufschlagungskanten (43a, 43b) begrenzte Zentriervertiefung (42) und das andere Krallenelement (27) eine tangential bezüglich dem Außenumfang der eingesteckten Fluidleitung (16) verlaufende Beaufschlagungskante (43c) aufweist.

21. Anschlussvorrichtung nach einem der Ansprüche 1 bis 20, **dadurch gekennzeichnet, dass** die Krallenelemente (27) zu ihren endseitigen Beaufschlagungsabschnitten (32) hin einen nach radial innen und zugleich in der Einsteckrichtung der Fluidleitung (16) nach axial innen orientierten schrägen Verlauf haben.

22. Anschlussvorrichtung nach einem der Ansprüche 1 bis 21, **dadurch gekennzeichnet, dass** an jedem Krallenelement (27) ein an der Vorderseite axial aus dem kombinierten Halte- und Lösering (22) herausragendes Betätigungselement (44) angeordnet ist, wobei die Betätigungselemente (44) eine optionale Lösebetätigung der Krallenelemente (27) durch axiale manuelle Beaufschlagung der Betätigungselemente (44) und daraus resultierendes Verschwenken der Krallenelemente (27) bezüglich dem Halte- und Lösering (22) ermöglichen.

## Claims

1. Connecting device for a fluid line, with a combined retaining and release ring (22) which encloses a plug-in opening (25) for a fluid line (16) and which supports on the main axis (28) which is perpendicular to the longitudinal ring axis (29) two diametrically opposite claw elements (27) which extend radially inwards and which are suitable for holding an inserted fluid line (16) circumferentially from opposite sides under preload, and which retaining and release ring (22) is resiliently deformable in such a way that it can be compressed to some extent manually at right angles to the main axis (28) in order to release a held fluid line (16), which simultaneously results in the direction of the main axis (28) in a mutual distancing of the opposite claw elements (27) while releasing a fluid line (16) placed in between, **characterised in that** at least one of the two claw elements (27) has a centring recess (42) at the force applying section (32) facing the other claw element (27), which centring recess (42) is laterally bounded by two force applying edges (43a, 43b) which extend towards each other in a radially outward direction and which are suitable for holding an inserted fluid line (16) by applying force while simultaneously centring it.

2. Connecting device according to claim 1, **characterised in that** the retaining and release ring (22) is made of a plastic material.

3. Connecting device according to claim 1 or 2, **characterised in that** the retaining and release ring (22) is made of a material having rubber-elastic properties, in particular of an elastomer material.

4. Connecting device according to claim 2 or 3, **characterised in that** the claw elements (27) are made of metal, in particular spring steel, and are embedded into the retaining and release ring (22) with a mounting section (38) in order to secure them to the retaining and release ring (22).

5. Connecting device according to claim 1, **characterised in that** the retaining and release ring (22) and the claw elements (27) are made of a metal having resilient properties and are integrated with each other.

6. Connecting device according to any of claims 1 to 5, **characterised in that** the retaining and release ring (22) is represented by an axial end section of an oblong hollow body (5).

7. Connecting device according to claim 6, **characterised in that** the hollow body (5) is designed as a single piece.

8. Connecting device according to claim 6 or 7, **characterised in that** the hollow body (5) is designed to be sleeve-like.

9. Connecting device according to any of claims 6 to 8, **characterised in that** the hollow body (5) is made of a rubber-elastic material.

10. Connecting device according to any of claims 6 to 9, **characterised in that** the hollow body (5) comprises a mounting ring (6) which is coaxial with the retaining and release ring (22) and axially spaced therefrom, and which is joined to the retaining and release ring (22) by two axial connecting webs (24), the connecting webs (24) starting from operating sections (34) of the retaining and release ring (22), to which force can be applied manually in order to release the inserted fluid line (16).

11. Connecting device according to claim 10, **characterised in that** the hollow body (5) is made of a metal having resilient properties.

12. Connecting device according to claim 11, **characterised in that** the hollow body (5) including the claw elements (27) is a stamped and bent part.

13. Connecting device according to any of claims 6 to 12, **characterised in that** the rear axial end section (6) of the hollow body (5), which is located opposite the retaining and release ring (22), is secured to a support body (1) or designed for securing to a support body (1).

14. Connecting device according to claim 13, **characterised in that** the hollow body (5) is provided at its rear axial end section (6) with anchoring means (7) for positive anchorage on the support body (1).

15. Connecting device according to claim 13 or 14, **characterised in that** the hollow body (5) is designed for rear insertion into a recess (3) of the support body (1) or for rear mounting on an extension of the support body (1).

16. Connecting device according to any of claims 13 to 15, **characterised in that** the support body (1) is a direct part of a fluid power component, such as a valve or a fluid-actuated drive.

17. Connecting device according to any of claims 13 to 15, **characterised in that** the hollow body (5) is supported by an individual support body (1) provided with connecting means (4) for mounting on a fluid power component.

18. Connecting device according to any of claims 6 to 17, **characterised in that** a sealing ring (17) which encloses the inserted fluid line (16) while forming a seal is assigned to the rear end region of the hollow body (5).

19. Connecting device according to any of claims 1 to 18, **characterised by** two diametrically opposite claw elements (27) of identical structure, each having a centring recess (42) bounded by two force applying edges (43a, 43b) extending at an angle towards each other.

20. Connecting device according to any of claims 1 to 18, **characterised in that** the two claw elements (27) are different in design, the first claw element (27) having a centring recess (42) bounded by two force applying edges (43a, 43b) extending at an angle towards each other and the second claw element (27) having a force applying edge (43c) extending tangentially with respect to the outer circumference of the inserted fluid line (16).

21. Connecting device according to any of claims 1 to 20, **characterised in that** the claw elements (27) have towards their end-face force applying sections (32) a radially inward orientation and simultaneously in the insertion direction of the fluid line (16) an axially inward, inclined orientation.

22. Connecting device according to any of claims 1 to 21, **characterised in that** an actuating element (44) which axially projects at the front of the combined retaining and release ring (22) is provided on each claw element (27), wherein the actuating elements (44) permit an optional release actuation of the claw elements (27) by the manual application of axial force to the actuating elements (44) and the resulting pivoting of the claw elements (27) with respect to the retaining and release ring (22).

## Revendications

1. Dispositif de raccordement pour une conduite de fluide, comportant une bague de serrage et de desserrage (22) combinée, laquelle entoure une ouverture d'enfichage (25) pour une conduite de fluide (16) et laquelle, sur un axe principal (28) perpendiculaire à l'axe longitudinal (29) de la bague, porte deux griffes (27) en saillie radialement vers l'intérieur, qui sont diamétralement opposées et qui, moyennant une précontrainte, sont aptes à exercer un effet de serrage à partir de deux côtés opposés sur la périphérie d'une conduite de fluide (16) enfichée, et laquelle est configurée de manière élastiquement déformable, de telle sorte que, en vue du desserrage d'une conduite de fluide (16) serrée, elle se laisse comprimer manuellement sur un bout, transversalement à l'axe principal (28), ce qui entraîne en même temps dans la direction de l'axe principal (28) une désolidarisation réciproque des griffes (27) diamétralement opposées tout en débloquant une conduite de fluide (16) disposée entre celles-ci, **caractérisé en ce qu'**au moins une des deux griffes (27) comporte, au niveau de la partie de sollicitation (32) orientée vers l'autre griffe (27), un creux de centrage (42) qui est délimité latéralement par deux bords de sollicitation (43a, 43b), qui convergent l'un vers l'autre radialement vers l'extérieur et qui sont aptes à exercer un effet de serrage sur une conduite de fluide (16) enfichée, tout en assurant un centrage simultané.

2. Dispositif de raccordement selon la revendication 1, **caractérisé en ce que** la bague de serrage et de desserrage (22) est réalisée en matière plastique.

3. Dispositif de raccordement selon la revendication 1 ou 2, **caractérisé en ce que** la bague de serrage et de desserrage (22) est réalisée dans un matériau avec des propriétés d'élasticité comme le caoutchouc, en particulier dans un matériau élastomère.

4. Dispositif de raccordement selon la revendication 2 ou 3, **caractérisé en ce que** les griffes (27) sont réalisées en métal, en particulier en acier à ressort, et sont encastrées dans la bague de serrage et de desserrage (22) pour être fixées sur la bague de serrage et de desserrage (22) avec une partie de fixation (38).

5. Dispositif de raccordement selon la revendication 1, **caractérisé en ce que** la bague de serrage et de desserrage (22) et les griffes (27) sont réalisées dans un métal avec des propriétés de ressort et sont réalisées d'un seul tenant entre elles.

6. Dispositif de raccordement selon l'une quelconque des revendications 1 à 5, **caractérisé en ce que** la bague de serrage et de desserrage (22) est formée par une zone d'extrémité axiale d'un corps creux (5) allongé.

7. Dispositif de raccordement selon la revendication 6, **caractérisé en ce que** le corps creux (5) est réalisé d'un seul tenant.

8. Dispositif de raccordement selon la revendication 6 ou 7, **caractérisé en ce que** le corps creux (5) est réalisé sous la forme d'un manchon.

9. Dispositif de raccordement selon l'une quelconque des revendications 6 à 8, **caractérisé en ce que** le corps creux (5) est réalisé dans un matériau élastique comme le caoutchouc.

10. Dispositif de raccordement selon l'une quelconque des revendications 6 à 9, **caractérisé en ce que** le corps creux (5) comporte une bague de fixation (6) coaxiale à la bague de serrage et de desserrage (22) et située à distance de celle-ci, laquelle est reliée à la bague de serrage et de desserrage (22) par l'intermédiaire de deux barrettes de liaison (24) axiales, lesdites barrettes de liaison (24) partent des parties d'actionnement (34) de la bague de serrage et de desserrage (22), lesquelles sont destinées à être sollicitées manuellement pour le desserrage de la conduite de fluide (16) enfichée.

11. Dispositif de raccordement selon la revendication 10, **caractérisé en ce que** le corps creux (5) est réalisé dans un métal avec des propriétés de ressort.

12. Dispositif de raccordement selon la revendication 11, **caractérisé en ce que** le corps creux (5), y compris les griffes (27), est un élément obtenu par découpe et pliage.

13. Dispositif de raccordement selon l'une quelconque des revendications 6 à 12, **caractérisé en ce que** la zone d'extrémité (6) axiale arrière du corps creux (5), opposée à la bague de serrage et de desserrage (22), est fixée à un corps de support (1) ou est réalisée pour être fixée à un corps de support (1).

14. Dispositif de raccordement selon la revendication 13, **caractérisé en ce que** le corps creux (5), au niveau de sa zone d'extrémité (6) axiale arrière, comporte des moyens d'ancrage (7) pour un ancrage par conjugaison de forme sur le corps de support (1).

15. Dispositif de raccordement selon la revendication 13 ou 14, **caractérisé en ce que** le corps creux (5) est réalisé pour être enfiché par son extrémité arrière dans un évidement (3) du corps de support (1) ou pour être emmanché par son extrémité arrière sur une saillie du corps de support (1).

16. Dispositif de raccordement selon l'une quelconque des revendications 13 à 15, **caractérisé en ce que** le corps de support (1) est une partie intégrante directe d'un composant de la technique des fluides, tel qu'une vanne ou un système d'entraînement actionné par un fluide.

17. Dispositif de raccordement selon l'une quelconque des revendications 13 à 15, **caractérisé en ce que** le corps creux (5) est porté par un corps de support (1) individuel, qui comporte des moyens de raccordement (4) pour la fixation à un composant de la technique des fluides.

18. Dispositif de raccordement selon l'une quelconque des revendications 6 à 17, **caractérisé en ce qu'**une bague d'étanchéité (17), entourant de manière étanche la conduite de fluide (16) enfichée, est associée à la zone d'extrémité arrière du corps creux (5).

19. Dispositif de raccordement selon l'une quelconque des revendications 1 à 18, **caractérisé par** deux griffes (27) diamétralement opposées, de structure identique, ayant chacune un creux de centrage (42) délimité par deux bords de sollicitation (43a, 43b) convergeant en oblique l'un vers l'autre.

20. Dispositif de raccordement selon l'une quelconque des revendications 1 à 18, **caractérisé en ce que** les deux griffes (27) sont configurées différemment, une griffe (27) comportant un creux de centrage (42) délimité par deux bords de sollicitation (43a, 43b) convergeant en oblique l'un vers l'autre, et l'autre griffe (27) comportant un bord de sollicitation (43c), s'étendant tangentiellement au pourtour extérieur de la conduite de fluide (16) enfichée.

21. Dispositif de raccordement selon l'une quelconque des revendications 1 à 20, **caractérisé en ce que** les griffes (27) vers leurs parties de sollicitation (32) à l'extrémité ont un tracé oblique orienté radialement vers l'intérieur et, en même temps, orienté axialement vers l'intérieur dans la direction d'enfichage de la conduite de fluide (16).

22. Dispositif de raccordement selon l'une quelconque des revendications 1 à 21, **caractérisé en ce que** sur chaque griffe (27) est disposé un élément d'actionnement (44) s'avançant à l'avant axialement hors de la bague de serrage et de desserrage (22) combinée, lesdits éléments d'actionnement (44) permettant une manoeuvre de desserrage optionnelle des griffes (27) par une sollicitation manuelle axiale des éléments d'actionnement (44) et un pivotement résultant des griffes (27) par rapport à la bague de serrage et de desserrage (22).
